# EUROPÄISCHE PATENTSCHRIFT

(11) **EP 1 035 290 B1**
(45) Veröffentlichungstag und Bekanntmachung des Hinweises auf die Patenterteilung: **12.01.2005**
(21) Anmeldenummer: 00100515.6
(22) Anmeldetag: 12.01.2000
(51) Int. Cl.: E06B 3/54, E04B 9/22, E04B 9/32

(54) **Haltevorrichtung für eine an einer Decke angebrachte Glasplatte**
Device for fastening glass plate to a ceiling
Dispositif pour fixer une plaque de verre à un plafond

(30) Priorität: 06.03.1999 DE 29904113 U
(43) Veröffentlichungstag der Anmeldung: 13.09.2000
(73) Patentinhaber: Feigl, Bernhard, 6911 Lochau (AT)
(72) Erfinder: Feigl, Bernhard, 6911 Lochau (AT)
(74) Vertreter: Engelhardt, Guido

(56) Entgegenhaltungen:
- EP-A- 0 655 542
- DE-A- 19 613 439
- DE-A- 19 636 165
- DE-B- 1 100 255

## Beschreibung

Die Erfindung bezieht sich auf eine Vorrichtung zur Halterung einer an einer Decke oder einer Platte mit Abstand zu dieser aufgehängten Glasplatte mittels mindestens einer an der Decke oder der Platte angebrachter Stange, an der jeweils eine die Glasplatte abstützende Auflagescheibe montiert ist.

Es ist bekannt, solche Haltevorrichtungen zum Abhängen von Decken mit Glasplatten zu verwenden, die in einem in der Bohrung der Decke befestigten Dübel eingeschraubt sind (vgl. z.B. DE 196 36 165 A oder DE 1100255C). Die derart arretierte Stange weist üblicherweise an ihrem freien Ende ein Innen- oder Außengewinde auf, auf das die mit einem korrespondierendem Gewinde versehenen Auflagescheibe aufschraubbar ist.
Die Auflagescheibe stützt demnach die Glasplatte ab. Um die Konstruktion gegen ein vertikales Verschieben nach oben abzusichern, ist ein an der Stange angebrachter Bund als Anschlagfläche vorgesehen, so daß die Glasplatte zwischen dem Bund und der Auflagescheibe verspannt ist.

Als nachteilig bei solchen Haltevorrichtungen hat es sich gezeigt, daß die Montage von großen und schweren Glasplatten sehr aufwendig und gefährlich ist, da die Glasplatte solange zu halten ist, bis die Auflagescheibe an der Stange montiert ist und die Glasplatte tragen kann.

Des weiteren ist die Anordnung der Auflagescheibe an der Stange optisch nicht ansprechend, da die Auflagescheiben aus der Glasplattenebene hervortritt und demnach optisch unästhetisch wirkt.

Aufgabe der Erfindung ist es daher, eine Haltevorrichtung der eingangs genannten Gattung derart weiterzubilden, daß die Montage, insbesondere von schweren und großen Glasplatten, erleichtert ist, und daß eine zuverlässige Abhängung der Glasplatte an einer Decke oder Platte gewährleistet ist.
Ferner soll der konstruktive Aufbau der Haltevorrichtung ästhetisch ansprechend wirken.

Diese Aufgaben werden erfindungsgemäß dadurch gelöst, daß die Stange an ihrem freien Ende eine axial gerichtete Quernut mit mindestens einer Hinterschneidung aufweist, daß der Auflagescheibe ein Zapfen mit einem der Quernut angepaßten Kopf zugeordnet ist, und daß der Zapfen im montierten Zustand seitlich gegen Verschieben gesichert ist.

Dadurch, daß zur Sicherung des Zapfens die Öffnungen der Quernut seitlich ganz oder teilweise durch die Glasplatte und/ oder durch Zwischenglieder abgedeckt ist, verschwinden die zur Halterung notwendigen Bauteile weitgehend innerhalb der Stange bzw. werden von der Glasplatte aus dem Sichtfeld genommen und abgedeckt, so daß eine optisch ansprechende Anordnung entsteht.

Um die vertikal auftretende Schwerkraft der Glasplatte aufzunehmen, ist die Quernut im Querschnitt als Hammerkopf oder Schwalbenschwanz ausgebildet.

Um die Montage der Glasplatte einfach und schnell durchzuführen, ist die der Glasplatte zugeordnete Buchse entlang der Stange verschiebbar.

Weitere vorteilhafte Ausgestaltungen der Erfindung ergeben sich aus den Unteransprüchen.

Auf Grund der Ausbildung der Stange mit einer axial gerichteten Quernut, die mindestens eine Hinterschneidung aufweist, ist die Montage der Glasplatte auf einfache Weise möglich, da die Glasplatte lediglich in Richtung der Decke über die Öffnung der Quernut anzuheben ist, und zwar so hoch bis der Zapfen und dessen Kopf in die Quernut seitlich eingeführt werden können.
Das Absenken der Glasplatte führt anschließend dazu, daß ein seitliches Verschieben des Zapfens verhindert wird, da die Öffnung der Quernut durch die Glasplatte und/ oder durch Zwischendglieder abgedeckt ist.

Dadurch, daß die Haltevorrichtung lediglich aus vier Bauteilen, nämlich der in der Decke angebrachten Stange, der beiden die Glasplatte einspannenden miteinander verschraubten Buchsen sowie der Auflagescheibe besteht, die zudem auf schnelle und einfache Weise miteinander montiert werden können, ist gewährleistet, daß auch sehr schwere und große
Glasplatten ohne komplizierte Abstützung während des Montagevorganges aufgehängt werden können, da für eine sehr schwere Glasplatte die Einfädelung auch auf mehreren diese Glasplatte haltenden Haltevorrichtungen ohne Schwierigkeiten schnell durchführbar ist.

Darüber hinaus können die Buchsen und die Einlage vormontiert werden, so daß die Glasplatte vor Ort lediglich durch Einschieben des an der Auflagescheibe angebrachten Zapfens mit dessen Kopf in die Stange einzuhängen ist.

Die zur Halterung der Glasplatte notwendigen Bauteile sind von unten oder seitlich nur schwer erkennbar, da diese im wesentlichen von der Glasplatte abgedeckt sind. Lediglich die Auflagescheibe, die in der Bohrung der Glasplatte als Abschluß angebracht ist, kann gesehen werden.

Diese Konstruktion der Haltevorrichtung ist folglich ästhetisch ansprechend ausgebildet, da nur wenig Bauteile sichtbar sind, die sich allerdings von der ebenen Glasplatte nicht abheben oder gar auftragend wirken.

Nachfolgend ist ein erfindungsgemäßes Ausführungsbeispiel in der Zeichnung näher erläutert. Im einzelnen zeigt:
- Figur 1: eine Vorrichtung zur Halterung einer an einer Decke angebrachten Glasplatte in Seitenansicht sowie im montierten Zustand,
und
- Figur 2: die Haltevorrichtung gemäß Figur 1 vor der Montage.

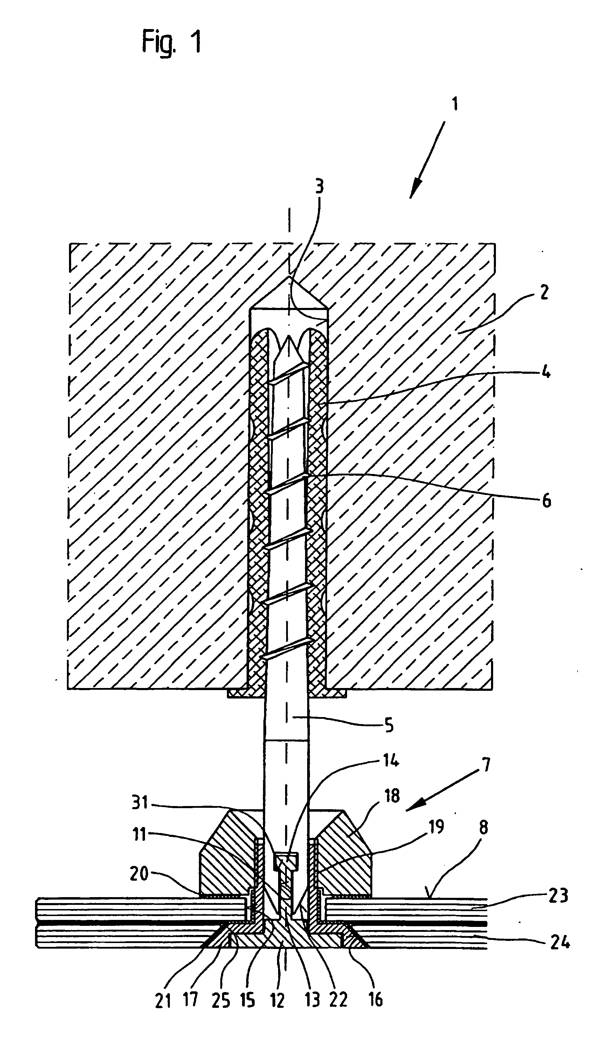

In der Figur 1 ist ein Haltevorrichtung 1 für eine an einer Decke 2 angebrachten Glasplatte 8 dargestellt.
In die Decke 2 ist eine Bohrung 3 eingearbeitet, in der ein Dübel 4 angeordnet ist.
Über den Dübel 4 wird eine mit einem Gewinde 6 versehene Stange 5 in der Decke 2 fixiert. Es ist auch möglich, die Stange 5 an einer - nicht dargestellten - Platten zu befestigen.
An dem freien Ende 7 der Stange 5 ist die Glasplatte 8 fixiert, wie dies nachfolgend näher erläutert ist.

In das freie Ende 7 der Stange 5 ist nämlich eine axial gerichtete Quernut 11 eingearbeitet, die zwei seitliche Öffnungen aufweist. Zur Abstützung der Glasplatte 8 dient eine Auflagescheibe 12, die derart ausgebildet ist, daß zwischen dieser und dem freien Ende 7 der Stange 5 eine formschlüssige Wirkverbindung entsteht.
Dazu ist die Quernut 11 im Querschnitt als Hammerkopf-Nut ausgebildet, die somit zwei parallel zueinander verlaufende Hinterschneidungen 31 aufweist.

An der Auflagescheibe 12 ist ein mit einem Kopf 14 ausgestatteter Zapfen 13 angebracht, deren Außenkonturen als positive Gegenstücke zu der Quernut 11 der Stange 7 ausgebildetet sind.

Um die Glasplatte 8, insbesondere wenn diese großflächig ausgebildet und somit schwer ist, gegen Bruch zu sichern, besteht die Glasplatte 8 aus zwei Glasscheiben 23 und 24, die im Folienverbund über die gesamte Fläche der Glasplatte 8 miteinander verbunden sind.

In die obere der Decke 2 zugewandten Glasscheibe 23 ist eine zylindrische Bohrung 15 und in die untere Glasscheibe 24 ist eine kegelstumpfförmige Bohrung 16 eingearbeitet, deren kleinster Bohrungsdurchmesser größer bemessen ist als der Bohrungsdurchmesser der zylindrischen Bohrung 15. Die Achsen der Bohrungen 15 und 16 verlaufen fluchtend zueinander.
Somit entsteht an der Glasscheibe 23 eine der Glasscheibe 24 zugewandte ringförmige Auflagefläche 25, über die auch die untere Glasscheibe 24 aufgrund des Folienverbundes abgestützt ist.

Die Glasplatte 8 ist zwischen zwei Buchsen 17 und 18 verspannt, in dem die Buchse 17 ein an deren Außenmantelfäche eingearbeitetes Gewinde 19 aufweist, das in das damit korrespondierende Innengewinde 19 der Buchse 18 eingeschraubt werden kann.

Um eine Berührung zwischen den aus Metall bestehenden Buchsen 17 sowie 18 und der Glasscheibe 8 zu verhindern, sind zwischen den Buchsen 17 bzw.18 und der Glasplatte 8 jeweils eine Einlage 20 bzw. 21 aus Gummi, Kunststoff oder dgl. angeordnet.

Die Außenkonturen der Buchsen 17 und 18 korrespondieren mit den in den Glasscheiben 23 und 24 eingearbeiteten zylindrischen bzw. kegelstumpfförmigen Bohrungen 15 bzw. 16.
Die Auflagescheibe 12 wird von der Buchse 17 vollständig aufgenommen, so daß im Bereich der Bohrung 16 der Glasplatte 24 eine ebene Fläche entsteht.

Die Halterung der Glasplatte 8 an der Stange 5 erfolgt dadurch, daß die als Hammerkopf ausgebildetete Quernut 11 den Zapfen 13 und dessen Kopf 14 aufnimmt und daß die Hinterschneidungen 31 den Kopf 14 und somit die Auflagescheibe 12 vertikal abstützen. Die Auflagescheibe 12 fixiert die Buchse 17 und aufgrund der Verschraubung zwischen den Buchsen 17 und 18 auch die Buchse 18.

Die kegelstumpfförmige Bohrung 16 der Glasscheibe 24 liegt auf der Außenkontur der Buchse 17 an, so daß eine formschlüssige Verbindung zwischen der Buchse 17 und der Glasscheibe 24 gebildet ist. Über diese formschlüssige Verbindung ist folglich die Glasscheibe 24 an der Buchse 17 abgestützt.
Ferner liegt die Glasscheibe 23 auf der dieser zugewandten Ringfläche der Buchse 17 auf, so daß auch die Glasscheibe 23 über die Buchse 17 und somit über die Auflagescheibe 12 abgestützt ist. Die im Folienverbund aneinander gehaltenen Glasscheiben 23, 24 werden demnach über eine sehr große horizontale Fläche aneinander gehalten, so daß die Glasscheibe 8 gegen Durchbruch im Bereich der Bohrungen 15 und 16 ausreichend gesichert ist.

Die horizontale Fixierung der Glasplatte 8 ist dadurch gewährleistet, daß die Buchse 17 die seitliche Öffnungen der Quernut 11 abdeckt und somit verschließt.
Auch beim Einwirken von horizontal gerichteten Kräften kann der Zapfen 13 und dessen Kopf 14 nicht aus der Quernut 11 rutschen, so daß die Glasplatte 8 zuverlässig aufgehängt ist.

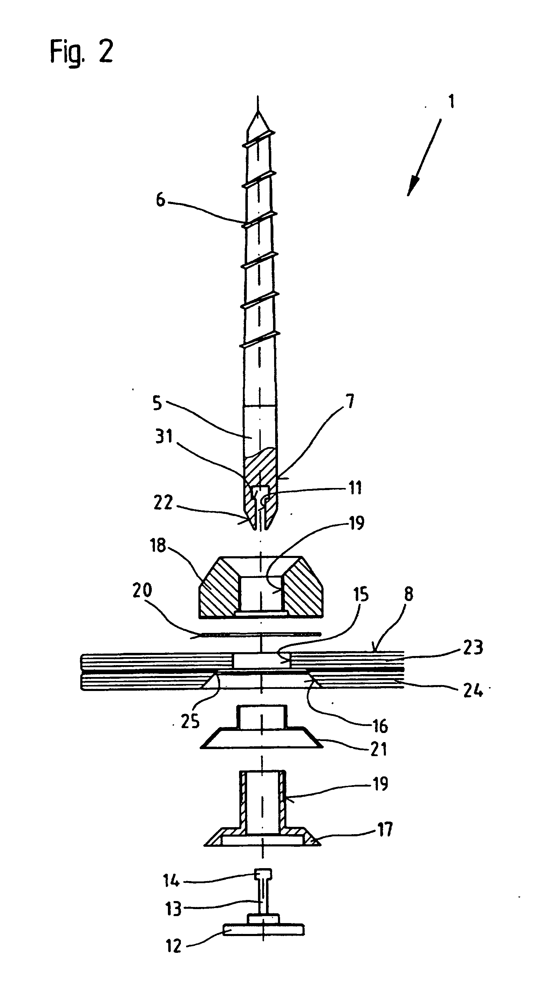

Aus der Figur 2 kann entnommen werden, wie die Glasplatte 8 an der Haltevorrichtung 1 zu montieren ist.

Zunächst werden, vorzugsweise im Herstellungswerk, in die einzelnen Glasscheiben 23, 24 eine oder mehrere der Bohrungen 15 und 16 eingearbeitet, um diese danach als Glasplatte 8 im Folienverbund zusammen zufügen.
Anschließend werden die Einlagen 20 und 21 derart aufgelegt, daß beim Verschrauben der Buchsen 17 und 18 ein direkter Kontakt zwischen den aus Metall bestehenden Buchsen 17 und 18 und der Glasplatte 8 verhindert ist.

Am Ort, an dem die Glasplatte 8 aufgehängt werden soll, wird in die dafür vorgesehene Decke 2 in vorbestimmter Weise eine oder mehrere der Bohrungen 3 gebildet und die Stange 5 in die dafür vorgesehene Bohrungen 3 eingeschraubt.
Danach wird die vormontierte Glasplatte 8 über die Stange 5 geschoben. Der Innendurchmesser der Buchse 17 ist demnach größer bemessen als der Außendurchmesser der Stange 5.

Zur Vereinfachung der Einfädelung ist die Stange 5 an ihrem freien Ende 7 mit einer Zentrierspitze 22 ausgestattet.
Der Abstand zwischen Decke 2 und dem Grund der Quernut 11 ist derart groß zu bemessen, daß die vormontierte Glasplatte 8 über die Quernut 11 geschoben werden kann und somit die Öffnungen der Quernut 11 freigegeben sind.
Anschließend wird der Zapfen 13 und dessen Kopf 14 in die Quernut 11 seitlich eingeführt, so daß die Auflagescheibe 12 formschlüssig mit der Stange 5 verbunden ist.
Durch das Absenken der vormontierten Glasplatte 8 werden die Öffnungen der Quernut 11 mittels der Buchse 17 abgedeckt, und der Zapfen 13 ist in der Quernut 11 arretiert.

Für großflächige Glasplatten 8 sind mehrere der beschriebenen Haltevorrichtungen 1 vorzusehen, um die Abstützung der Glasplatte 8 zuverläßig zu gewährleisten.
Des weiteren kann die Stange 5 auch an eine Platte oder dgl. angebracht sein, die wiederum mittels eines mehrere solcher Platten tragenden Hauptträgers an der Decke 2 abgestützt ist.
Der Haupträger umfaßt dabei mehrere Arme, die vorzugsweise sternförmig von der Mittelachse des Haupträgers verlaufen und jeweils eine Platte fixieren.

## Patentansprüche

1. Vorrichtung (1) zur Halterung einer an einer Decke (2) oder einer Platte mit Abstand zu dieser aufgehängten Glasplatte (8) mittels mindestens einer an der Decke (2) oder der Platte angebrachter Stange (5), an der jeweils eine die Glasplatte (8) abstützende Auflagescheibe (12) montiert ist,
**dadurch gekennzeichnet,**
**daß** die Stange (5) an ihrem freien Ende (7) eine axial gerichtete Quernut (11) mit mindestens einer Hinterschneidung (31) aufweist, daß der Auflagescheibe (12) ein Zapfen (13) mit einem der Quernut angepaßten Kopf (14) zugeordnet ist, und daß der Zapfen (13) im montierten Zustand seitlich gegen Verschieben gesichert ist.

2. Haltevorrichtung nach Anspruch 1,
**dadurch gekennzeichnet,**
**daß** zur Sicherung des Zapfens (13) die Öffnung der Quernut (11) seitlich ganz oder teilweise durch die Glasplatte (8) und/ oder durch Zwischenglieder (17, 18) abgedeckt ist.

3. Haltevorrichtung nach Anspruch 2,
**dadurch gekennzeichnet,**
**daß** das Zwischenglied aus zwei miteinander verschraubten Buchsen (17, 18) besteht, zwischen denen die Glasplatte (8) eingespannt ist.

4. Haltevorrichtung nach einem oder mehreren der vorgenannten Ansprüche,
**dadurch gekennzeichnet,**
**daß** die Quernut (11) im Querschnitt als Hammerkopf oder Schwalbenschwanz ausgebildet ist.

5. Haltevorrichtung nach einem oder mehreren der vorgenannten Ansprüche,
**dadurch gekennzeichnet,**
**daß** in die Glasplatte (8) zwei unterschiedlich groß bemessene Ausnehmungen (15, 16) eingearbeitet sind, deren Mittelachse fluchtend zueinander verlaufen.

6. Haltevorrichtung nach Anspruch 5,
**dadurch gekennzeichnet,**
**daß** in dem oberen der Decke (2) zugewandten Bereich der Glasplatte (8) eine kleinere Bohrung (15) eingearbeitet ist als die in dem unteren Bereich der Glasplatte (8) vorgesehene Bohrung (16).

7. Haltevorrichtung nach Anspruch 6,
**dadurch gekennzeichnet,**
**daß** im oberen Bereich der Glasplatte (8) ein dem unteren Bereich der Glasplatte (8) zugewandter ringförmiger Anlagefläche (25) zugeordnet ist, auf der die Auflagescheibe (12) anliegt.

8. Haltevorrichtung nach Anspruch 7,
**dadurch gekennzeichnet,**
**daß** im unteren Bereich der Glasplatte (8) eine kegelstumpfförmige Bohrung (16) vorgesehen ist, an deren Flanken die Auslagescheibe (12) formschlüssig anliegt.

9. Haltevorrichtung nach einem oder mehreren der vorgenannten Ansprüche,
**dadurch gekennzeichnet,**
**daß** die Buchse (17) einen derart groß bemessenen Innendurchmesser aufweist, daß diese entlang der Stange (5) verschiebbar ist.

10. Haltevorrichtung nach einem oder mehreren der vorgenannten Ansprüche,
**dadurch gekennzeichnet,**
**daß** zwischen der Glasplatte (8) und/ oder der Auflagescheibe (12) und/ oder der Buchsen (17, 18) jeweils eine Einlage (20, 21) aus Gummi, Kunststoff oder dgl. angeordnet ist.

11. Haltevorrichtung nach einem oder mehreren der vorgenannten Ansprüche,
**dadurch gekennzeichnet,**
**daß** der Abstand zwischen der Decke (2) und dem Grund der Quernut (11) derart groß bemessen ist, daß die Glasplatte mit und/ oder ohne Zwischenglieder (17, 18) über die Öffnung der Quernut (11) verschiebbar ist.

12. Haltevorrichtung nach einem oder mehreren der vorgenannten Ansprüche,
**dadurch gekennzeichnet,**
**daß** die Glasplatte (8) aus mindestens zwei Glasscheiben (23, 24) gebildet ist, die im Folienverbund über deren gesamten Berührungsfläche miteinander verbunden sind.

13. Haltevorrichtung nach einem oder mehreren der vorgenannten Ansprüche,
**dadurch gekennzeichnet,**
**daß** an dem freien Ende (7) der Stange (5) eine Zentrierspritze (22) vorgesehen ist.

## Claims

1. A device (1) for holding a glass plate (8) suspended at a distance from a ceiling (2) or a panel by means of a rod (5) attached to the ceiling (2) or the panel, with a contact disc (12) supporting the glass plate (8) mounted on the rod (5),
**characterized in that**,
the free end (7) of the rod (5) has an axially arranged transverse groove (11) with at least one undercut (31), that a spigot (13) with a head (14) adapted to the transverse groove is assigned to the contact disc (12), and that the spigot (13) is secured against displacement when it is installed.

2. The holding fixture in accordance with Claim 1,
**characterized in that**
in order to secure the spigot (13), the opening of the transverse groove (11) is fully or partially covered sideways by the glass plate (8) and/or by intermediate elements (17, 18).

3. The holding fixture in accordance with Claim 2,
**characterized in that**
that the intermediate element consists of two bushes (17, 18) screwed together and the glass plate (8) is clamped between them.

4. The holding fixture in accordance with one or more of the aforementioned claims,
**characterized in that**
the transverse groove (11) has a hammerhead or dovetail cross section.

5. The holding fixture in accordance one or more of the aforementioned claims,
**characterized in that**
two differently sized recesses (15, 16) are worked into the glass plate (8), the central axes of which run flush with one another.

6. The holding fixture in accordance Claim 5,
**characterized in that**
the hole (15) worked into the upper area of the glass plate (8) facing the ceiling (2) is smaller than the hole (16) provided in the lower area of the glass plate (8).

7. The holding fixture in accordance Claim 6,
**characterised in that**,
a ring-shaped contact surface (25) facing the lower area of the glass plate (8) is arranged in the upper area of the glass plate (8) and the contact disc (12) is in contact with this contact surface (25).

8. The holding fixture in accordance with Claim 7,
**characterised in that**,
a truncated conical hole (16) is provided in the lower area of the glass plate (8) and the contact disc (12) is in a positive-locking connection with the flanks of the hole (16).

9. The holding fixture in accordance with one or more of the aforementioned claims,
**characterised in that**,
the internal diameter of the bush (17) is large enough to allow it to be moved along the rod (5).

10. The holding fixture in accordance with one or more of the aforementioned claims,
**characterised in that**,
an inlay (20, 21) made of rubber, plastic or the like is arranged between the glass plate (8) and/or the contact disc (12) and/or the bushes (17, 18) in each case.

11. The holding fixture in accordance with one or more of the aforementioned claims,
**characterised in that**,
the distance between the ceiling (2) and the base of the transverse groove (11) is sufficiently large so the glass plate can be pushed over the opening of the transverse groove (11) with and/or without intermediate elements (17, 18).

12. The holding fixture in accordance with one or more of the aforementioned claims,
**characterised in that**,
the glass plate (8) is made from at least two panes of glass (23, 24) that are connected together over their entire contact surface in the film joint.

13. The holding fixture in accordance with one or more of the aforementioned claims,
**characterised in that**,
a centring tip (22) is provided on the free end (7) of the rod (5).

## Revendications

1. Dispositif (1) pour la fixation espacée d'une plaque de verre (8) au plafond (2) ou à une plaque, au moyen d'au moins une tige (5) fixée au plafond (2) ou sur la plaque, sur laquelle est montée respectivement une plaque d'appui (12) portant la plaque de verre (8),
**caractérisé en ce que**
sur son extrémité libre (7), la tige (5) porte en direction axiale, une gorge transversale (11) avec au moins une contre-dépouille (31), qu'à la plaque d'appui (12), il est assigné un téton (13) avec une tête (14) épousant la forme de la gorge transversale et qu'en état monté, le téton est protégé contre tout déplacement latéral.

2. Dispositif de retenue d'après la revendication 1,
**caractérisé en ce que**
pour le freinage du téton (13), le côté de l'ouverture de la gorge transversale (11) est recouvert partiellement ou entièrement par la plaque de verre (8) et/ou par des éléments intermédiaires (17, 18).

3. Dispositif de retenue d'après la revendication 2,
**caractérisé en ce que**
l'élément intermédiaire est composé de deux douilles (17, 18) vissées ensemble, entre lesquelles il est serré la plaque de verre (8).

4. Dispositif de retenue d'après une ou plusieurs des revendications précédentes,
**caractérisé en ce que**
la section de la gorge transversale (11) est conçue sous la forme d'une tête rectangulaire ou d'une queue d'aronde.

5. Dispositif de retenue d'après une ou plusieurs des revendications précédentes,
**caractérisé en ce que**
dans la plaque de verre (8), il est pratiqué deux évidements de tailles différentes (15, 16) dont les axes centraux sont alignés l'un par rapport à l'autre.

6. Dispositif de retenue d'après la revendication 5,
**caractérisé en ce que**
dans le dessus de la plaque de verre (8) orienté vers le plafond (2), il est pratiqué un perçage (15) qui est plus petit que le perçage (16) pratiqué dans le dessous de la plaque de verre (8).

7. Dispositif de retenue d'après la revendication 6,
**caractérisé en ce que**
au dessus de la plaque de verre (8), il est assigné une face de portée annulaire (25) qui donne sur la face inférieure de la plaque de verre (8) et sur laquelle porte la plaque d'appui (12).

8. Dispositif de retenue d'après la revendication 7,
**caractérisé en ce que**
dans le dessous de la plaque de verre (8), il est prévu un perçage sous la forme d'un cône tronqué (16), dont les flancs sont épousés par la plaque d'appui (12).

9. Dispositif de retenue d'après une ou plusieurs des revendications précédentes,
**caractérisé en ce que**
la douille (17) a un diamètre intérieur assez grand pour permettre son déplacement le long de la tige (5).

10. Dispositif de retenue d'après une ou plusieurs des revendications précédentes,
**caractérisé en ce que**
entre la plaque de verre (8) et/ou la plaque d'appui (12) et/ou les douilles (17, 18), il est prévu respectivement une doublure (20, 21) en caoutchouc, en matière synthétique ou en matière similaire.

11. Dispositif de retenue d'après une ou plusieurs des revendications précédentes,
**caractérisé en ce que**
l'écartement entre le plafond (2) et le fond de la gorge transversale (11) est dimensionné tel que la plaque de verre se laisse déplacer avec ou sans éléments intermédiaires (17, 18) sur l'ouverture de la gorge transversale (11).

12. Dispositif de retenue d'après une ou plusieurs des revendications précédentes,
**caractérisé en ce que**
la plaque de verre (8) consiste en au moins deux plaques de verre (23, 24) liées sous la forme d'une feuille composée sur l'ensemble de leur face de contact.

13. Dispositif de retenue d'après une ou plusieurs des revendications précédentes,
**caractérisé en ce que**
sur l'extrémité libre (7) de la tige (5), il est prévu une pointe de centrage (22).
